(19) Europäisches Patentamt
European Patent Office
Office européen des brevets

(11) **EP 3 391 440 B1**

(12) **EUROPEAN PATENT SPECIFICATION**

(45) Date of publication and mention
of the grant of the patent:
**30.10.2019  Bulletin 2019/44**

(21) Application number: **15832745.2**

(22) Date of filing: **18.12.2015**

(51) Int Cl.:
*H01M 4/485* (2010.01)    *H01M 4/505* (2010.01)
*H01M 4/525* (2010.01)    *H01M 10/44* (2006.01)
*H01M 4/58* (2010.01)    *H01M 10/0525* (2010.01)

(86) International application number:
**PCT/IB2015/002559**

(87) International publication number:
**WO 2017/103641 (22.06.2017 Gazette 2017/25)**

(54) **USE OF ELECTROCHEMICAL CELLS CONTAINING A LITHIATED TITANATE OXIDE NEGATIVE ACTIVE MATERIAL FOR LOW EARTH ORBIT APPLICATIONS**

VERWENDUNG VON ELEKTROCHEMISCHEN ZELLEN MIT EINEM NEGATIV-AKTIVMATERIAL AUS LITHIERTEM TITANATOXID FÜR ANWENDUNGEN MIT NIEDRIGER ERDUMLAUFBAHN

UTILISATION DE CELLULES ÉLECTROCHIMIQUES CONTENANT UN MATÉRIAU ACTIF NÉGATIF À BASE D'OXYDE DE TITANATE LITHIÉ POUR DES APPLICATIONS D'ORBITE TERRESTRE BASSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.10.2018  Bulletin 2018/43**

(73) Proprietor: **SAFT**
**92300 Levallois-Perret (FR)**

(72) Inventors:
• **NECHEV, Kamen**
**Cockeysville**
**Maryland 21030 (US)**
• **BORTHOMIEU, Yannick**
**86580 Vouneuil sous Biard (FR)**
• **MA, Chengsong**
**Lutherville-Timonium**
**Maryland 21093 (US)**
• **GRESZLER, Thomas**
**Phoenix**
**Maryland 21131 (US)**

• **TESSIER, Cécile**
**33520 Bruges (FR)**

(74) Representative: **Hirsch & Associés**
**137, rue de l'Université**
**75007 Paris (FR)**

(56) References cited:
**EP-A2- 2 945 211**    **WO-A1-2014/142078**
**CN-A- 101 800 307**    **CN-A- 103 107 323**
**US-A1- 2010 273 055**

• **JIE WANG, PROF. HAILEI ZHAO, YONGNA SHEN, ZHIHONG DU, XIAOMIN CHEN, QING XIA: "Structure, Stoichiometry, and Electrochemical Performance of Li2CoTi3O8 as an Anode Material for Lithium-Ion Batteries", CHEMPLUS CHEM, vol. 78, no. 12, 2 October 2013 (2013-10-02), pages 1530-1535, XP055305030, Weiheim ISSN: 2192-6506, DOI: 10.1002/cplu.201300235**

**Description**

TECHNICAL FIELD

The invention pertains to the technical field of lithium-ion electrochemical cells used in satellites placed in low earth orbit.

BACKGROUND OF THE INVENTION

The low earth orbit (LEO) is an orbit around Earth with an altitude between about 160 km and 2,000 km. The electrochemical cells of a satellite placed in low earth orbit are charged during periods of sunlight and discharged during periods of darkness to meet the satellite's power demand. In LEO applications, the time of charge of the electrochemical cells is thus imposed by the duration of the sunlight.

The majority of satellites placed in LEO make one complete revolution around the Earth in about 90 minutes. During this complete revolution, an electrochemical cell of the satellite undergoes one cycle of charge/discharge. The charging time can be as short as 60-65 minutes. This implies that the electrochemical cell should be capable of withstanding repeated charge and discharge cycles within a relatively short period of time and at high charge and discharge rates. Typically, a charge rate for which the cell is charged/discharged within one hour is sought. This means a charge/discharge rate of at least C, C being the nominal capacity of the cell.

Additionally, in LEO applications, an electrochemical cell is expected to last up to 12 years. Since, the cell undergoes about 15 cycles of charge/discharge per day, the LEO application requires that the cell be capable of undergoing about 5,300 charge/discharge cycles in a year, thus about 65,000 charge/discharge cycles over 12 years.

Electrochemical cells comprising graphite as negative active material and a lithiated oxide of nickel, cobalt and aluminum (NCA) as positive active material are known in the art. They operate at a mean voltage of 3.5 V and provide a relatively high energy density of at least about 150 Wh/kg. However, they cannot be charged at a high charge rate nor can they reach a high life cycle of 65,000 charge/discharge cycles over 12 years. Indeed, when a cell containing graphite in the negative electrode is partly or fully charged at a high current, some electrode areas are more solicited than others. As lithium diffusion in a graphite electrode is ten times less than in the positive electrode, lithium ion concentration tends to increase in the more solicited areas and to decrease in the less active ones. This induces a lithium distribution heterogeneity at the surface of the negative electrode, which eventually causes degradation of the negative electrode. Further, when such a cell is used under cycling conditions, a rapid loss of capacity is observed.

In order to avoid lithium distribution heterogeneity at the surface of the negative electrode, a moderate charge rate has to be applied, such as C/3 for a high rate capable graphite electrode. However, this low charge rate limits the depth of discharge of the cell to about 30%.

Therefore, there is a need for a lithium-ion electrochemical cell which would be capable of withstanding high charge/discharge rates, that is, rates of at least C/2, without experiencing a reduced loss of capacity when used in charge/discharge cycle conditions in comparison with an electrochemical cell containing graphite as the negative active material. CN 101800307 A, CN 103107323 A, EP 2945211 A2, WO 2014/142078 A1, US2010/273055 A1 describe examples of electrochemical cells containing a lithiated titanate oxide negative active material.

SUMMARY OF THE INVENTION

To this end, the invention provides an electrochemical cell for use in a low earth orbit spacecraft, said electrochemical cell comprising a positive electrode and a negative electrode, said negative electrode comprising as an electrochemically active material a lithiated titanate oxide or a titanate oxide able to be lithiated. The spacecraft may be a satellite, in particular a communication and Earth or space observation satellite

According to one embodiment, the electrochemical cell is discharged at a depth of discharge of at least 50%, preferably at least 70%, most preferably 80%.

According to one embodiment, the electrochemical cell is charged at a current of at least C/2, preferably at least C, wherein C is the nominal capacity of the electrochemical cell.

According to one embodiment, the electrochemical cell undergoes at least 15 cycles of charge/discharge per day.

According to one embodiment, the lifetime of the electrochemical cell is up to 12 years.

According to one embodiment, the electrochemical cell is capable of undergoing at least about 65,000 cycles during its lifetime, preferably at least 70,000 cycles.

According to one embodiment, the lithiated titanate oxide or the titanate oxide able to be lithiated is selected from the group consisting of:

a) $Li_aTi_bO_4$ wherein $0.5 \leq a \leq 3$ and $1 \leq b \leq 2.5$

b) $Li_xMg_yTi_zO_4$ wherein $x>0$; $z>0$; $0.01 \leq y \leq 0.20$; $0.01 \leq y/z \leq 0.10$ and $0.5 \leq (x+y)/z \leq 1.0$

c) $Li_{4+y}Ti_{5-d}M^2_dO_{12}$ wherein $M^2$ is at least one metal selected from the group consisting of Mg, Al, Si, Ti, Zn, Zr, Ca, W, Nb, and Sn, $-1 \leq y \leq 3.5$ and $0 \leq d \leq 0.1$

d) $H_2Ti_6O_{13}$

e) $H_2Ti_{12}O_{25}$

f) $TiO_2$

g) $Li_xTiNb_yO_z$ wherein $0 \leq x \leq 5$; $1 \leq y \leq 24$; $7 \leq z \leq 62$

h) $Li_aTiM_bNb_cO_{7+\sigma}$ wherein $0 \leq a \leq 5$; $0 \leq b \leq 0.3$; $0 \leq c \leq 10$; $-0.3 \leq \sigma \leq 0.3$ and M is at least one element selected from Fe, V, Mo and Ta

i) $Nb\alpha Ti_\beta O_{7+\gamma}$ wherein $0 \leq \alpha \leq 24$; $0 \leq \beta \leq 1$ ; $-0.3 \leq \gamma \leq 0.3$

and mixtures thereof.

According to one embodiment, the positive electrode comprises an electrochemically active material selected from the group consisting of:

- compound i) having the formula $Li_xMn_{1-y-z}M'_yM''_zPO_4$ (LMP), where M' and M" are different from one another and are selected from the group consisting of B, Mg, Al, Si, Ca, Ti, V, Cr, Fe, Co, Ni, Cu, Zn, Y, Zr, Nb and Mo, with $0.8 \leq x \leq 1.2$ ; $0 \leq y \leq 0.6$ ; $0 \leq z \leq 0.2$;
- compound ii) having the formula $Li_xM_{2-x-y-z-w}M'_yM''_zM'''_wO_2$ (LMO2), where M, M', M" and M''' are selected from the group consisting of B, Mg, Al, Si, Ca, Ti, V, Cr, Mn, Fe, Co, Ni, Cu, Zn, Y, Zr, Nb and Mo, provided that M or M' or M" or M''' is selected from Mn, Co, Ni, or Fe ; M, M', M" and M''' being different from each other; with $0.8 \leq x \leq 1.4$ ; $0 \leq y \leq 0.5$ ; $0 \leq z \leq 0.5$; $0 \leq w \leq 0.2$ and $x+y+z+w<2$ ;
- compound iii) having the formula $Li_xMn_{2-y-z}M'_yM''_zO_4$ (LMO), where M' and M" are selected from the group consisting of B, Mg, Al, Si, Ca, Ti, V, Cr, Fe, Co, Ni, Cu, Zn, Y, Zr, Nb and Mo; M' and M" are different from each other, and $1 \leq x \leq 1.4$ ; $0 \leq y \leq 0.6$ ; $0 \leq z \leq 0.2$ ;
- compound iv) of formula $Li_xFe_{1-y}M_yPO_4$ (LFMP), where M is selected from the group consisting of B, Mg, Al, Si, Ca, Ti, V, Cr, Mn, Co, Ni, Cu, Zn, Y, Zr, Nb and Mo; and $0.8 \leq x \leq 1.2$ ; $0 \leq y \leq 0.6$;
- compound v) of formula $xLi_2MnO_3$; $(1-x)LiMO_2$ where M is selected from Ni, Co and Mn and $x \leq 1$ ;
- compound vi) of formula $Li_{a+y}(M^1_{(1-t)}Mo_t)_2M^2_b(O_{1-x}F_{2x})_c$ wherein $M^1$ is selected from the group consisting of Ni, Mn, Co, Fe, V or a mixture thereof; $M^2$ is selected from the group consisting of B, Al, Si, P, Ti and Mo ; with $4 \leq a \leq 6$ ; $0 \leq b \leq 1.8$ ; $3.8 \leq c \leq 14$ ; $0 \leq x \leq 1$ ; $-0.5 \leq y \leq 0.5$ ; $0 \leq t \leq 0.9$ ; $b/a<0.45$ ; the coefficient c satisfying one of the following relationships:

$$c = 4 + y/2 + z + 2t + 1.5b$$

if $M^2$ is selected from B and Al;

$$c = 4 + y/2 + z + 2t + 2b$$

if $M^2$ is selected from Si, Ti and Mo;

$$c = 4 + y/2 + z + 2t + 2.5b$$

if $M^2$ is P; with $z=0$ if $M^1$ is selected from Ni, Mn, Co and Fe; and $z=1$ if $M^1$ is V.

- compound vii) of formula $Li_{4+x}MnM^1_aM^2_bO_c$ wherein:

  $M^1$ is selected from the group consisting in Ni, Mn, Co, Fe and a mixture thereof;
  $M^2$ is selected from the group consisting in Si, Ti, Mo, B, Al and a mixture thereof; with:

$$-1.2 \leq x \leq 3 \; ; \; 0 < a \leq 2.5 \; ; \; 0 \leq b \leq 1.5 \; ; \; 4.3 \leq c \leq 10;$$

and

$$c=4+a+n.b+x/2$$

wherein:

n= 2 when $M^2$ is selected from the group consisting in Si, Ti, Mo or a mixture thereof; and
n=1.5 when $M^2$ is selected from the group consisting in B, Al or a mixture thereof,

- and a mixture of one or more of compounds i) to vii).

The formula of compound ii) may in particular fulfil the following requirements:

$$1 \leq x \leq 1.15;$$

M is Ni;
M' is Co;
M" is Al
y>0;
z>0;
w=0.

Preferably in compound ii), x=1; $0.6 \leq 2-x-y-z \leq 0.85$; $0.10 \leq y \leq 0.25$; $0.05 \leq z \leq 0.15$.
In one preferred embodiment, compound ii) is $LiNi_{0.8}Co_{0.15}Al_{0.05}O_2$.

BRIEF DESCRIPTION OF THE DRAWINGS

Figure 1 shows the charge/discharge curves of two cells according to the invention at various charge/discharge rates.
Figure 2 shows variation of impedance as a function of the number of cycles.
Figure 3 shows variation of capacity loss as a function of the number of cycles.
Figure 4 shows the percentage of retained capacity as a function of the number of cycles for a reference cell (C) and for cells according to the invention (D-K).

DETAILED DESCRIPTION OF EMBODIMENTS

The Applicant has unexpectedly discovered that electrochemical cells containing a lithiated titanate oxide or a titanate oxide able to be lithiated (LTO) as negative electrochemically active material can be charged/discharged at a high current, thereby meeting the requirement of the LEO application. Indeed, the use of LTO as negative electrochemically active material allows a suppression of the heterogeneous distribution of lithium at the surface of the negative electrode when the cell is charged at a high current.
Since cells containing an LTO as the negative active material support a higher charging current, depth of discharge can be increased up to 50%, more preferably up to 70%, and most preferably up to 80%, which represents a significant improvement in comparison with the limit of 30% achievable when the negative active material is graphite.
This discovery is unexpected since it is known that electrochemical cells containing LTO as negative active material and a lithiated oxide of NCA as positive active material have an energy density of about 100 Wh/kg, which is low in comparison with the energy density of cells containing graphite as negative active material and NCA as positive active material, which is about 150 Wh/kg. Thus, although it would be disadvantageous in terms of energy density to use LTO as the negative active material in comparison with graphite, the use of LTO is advantageous in the context of the present invention, that is, when the cell is subjected to charging at a high rate. As a matter of fact, for LEO applications, a cell containing graphite as the negative active material and a lithiated oxide of NCA as the positive active material offers an effectively usable energy density of only about 45 Wh/kg instead of 70-80 Wh/kg reached by a cell the negative electrode of which contains LTO.
The lithiated titanate oxide or the titanate oxide able to be lithiated may be selected from the following oxides:

a) $Li_aTi_bO_4$ wherein $0.5 \leq a \leq 3$ and $1 \leq b \leq 2.5$, including $Li_4Ti_5O_{12}$, $Li_2TiO_3$ $Li_2Ti_3O_7$ and $LiTi_2O_4$
b) $Li_xMg_yTi_zO_4$ wherein x> 0; z>0; $0.01 \leq y \leq 0.20$; $0.01 \leq y/z \leq 0.10$; and $0.5 \leq (x+y)/z \leq 1.0$

c) $Li_{4+y}Ti_{5-d}M^2_dO_{12}$ wherein $M^2$ is at least one metal selected from the group consisting of Mg, Al, Si, Ti, Zn, Zr, Ca, W, Nb, and Sn, $-1\leq y\leq 3.5$, and $0\leq d\leq 0.1$

d) $H_2Ti_6O_{13}$

e) $H_2Ti_{12}O_{25}$

f) $TiO_2$

g) $Li_xTiNb_yO_z$ wherein $0\leq x\leq 5$; $1\leq y\leq 24$; $7\leq z\leq 62$.

h) $Li_aTiM_bNb_cO_{7+\sigma}$ wherein $0\leq a\leq 5$; $0\leq b\leq 0.3$; $0\leq c\leq 10$; $-0.3\leq\sigma\leq 0.3$ and M is at least one element selected from Fe, V, Mo and Ta.

i) $Nb_\alpha Ti_\beta O_{7+\gamma}$ wherein $0\leq\alpha\leq 24$; $0\leq\beta\leq 1$; $-0.3\leq\gamma\leq 0.3$

and mixtures thereof.

The negative electrode is prepared in a conventional manner. It consists of a conductive support used as a current collector which is coated with a layer containing the lithiated titanate oxide or the titanate oxide able to be lithiated and further comprising a binder and a conductive material. The current collector is preferably a two-dimensional conductive support such as a solid or perforated strip, generally made of copper.

The binder has the function of strengthening the cohesion between the active material particles as well as of improving the adhesion of the paste to the current collector. The binder may contain one or more of the following: polyvinylidene fluoride (PVDF) and its copolymers, polytetrafluoroethylene (PTFE), polyacrylonitrile (PAN), poly(methyl)- or (butyl)-methacrylate, polyvinyl chloride (PVC), polyvinyl formal, polyester and polyether block amides, polymers of acrylic acid, methacrylic acid, acrylamide, itaconic acid, sulfonic acid, elastomers and cellulose compounds.

The electron-conductive additive is generally selected from graphite, carbon black, acetylene black, soot or a mixture thereof. It is used in a low amount, generally 5% or less.

The positive electrochemically active material is not particularly limited.

A <u>first</u> preferred positive electrochemically active material is a compound ii) having the formula:

$$Li_xM_{2-x-y-z-w}M'_yM''_zM'''_wO_2 \text{ (LMO2)},$$

where:

M is Ni, M' is Co, M'' is Al, M''' is B or Mg, and
x ranges from 0.9 to 1.1;
$y>0$;
$z>0$ ;
$0\leq w\leq 0.2$.

According to an embodiment:
x ranges from 0.9 to 1.1;

$$0.70\leq 2\text{-}x\text{-}y\text{-}z\text{-}w\leq 0.9$$

$$0.05\leq y\leq 0.25;$$

$$0<z\leq 0.10$$

and

$$y+z+w=1.$$

According to an embodiment:
x ranges from 0.9 to 1.1;

$$0.75\leq 2\text{-}x\text{-}y\text{-}z\text{-}w\leq 0.85;$$

$$0.10 \leq y \leq 0.20;$$

$$0 < z \leq 0.10$$

and

$$y+z+w=1.$$

According to an embodiment, 2-x-y-z-w=0.80; y=0.15 and z=0.05.

A second preferred positive electrochemically active material is a compound ii) having the formula:

$$Li_xM_{2-x-y-z-w}M'_yM''_zM'''_wO_2 \text{ (LMO2)},$$

where

M is Ni, M' is Mn and M" is Co and
M'" is selected from the group consisting of B, Mg, Al, Si, Ca, Ti, V, Cr, Mn, Fe, Co, Ni, Cu, Zn, Y, Zr, Nb and Mo, with $0.8 \leq x \leq 1.4$; $0 < y \leq 0.5$; $0 \leq z \leq 0.5$; $0 \leq w \leq 0.2$ and $x+y+z+w<2$.

According to one embodiment, M is Ni, M' is Mn, M" is Co and 2-x-y-z-w<0.60.
According to one embodiment, M is Ni, M' is Mn, M" is Co and $0.45 \leq 2\text{-x-y-z-w} \leq 0.55$.
According to one embodiment, M is Ni, M' is Mn, M" is Co and $0.40 \geq y \geq 0.15$; preferably $0.35 \geq y \geq 0.20$.
According to one embodiment, M is Ni, M' is Mn, M" is Co and $0.40 \geq z \geq 0.15$; preferably $0.35 \geq z \geq 0.20$.
According to one embodiment, $1 \leq x \leq 1.1$; preferably $1.01 \leq x \leq 1.06$.
Examples of compound ii) are:

- $LiNi_{1/3}Mn_{1/3}Co_{1/3}O_2$;
- $Li_{1,x}Ni_{0.5}Mn_{0.3}Co_{0.2}O_2$ with $0.01 \leq x \leq 0.10$, preferably $0.01 \leq x \leq 0.06$;
- $Li_{1+x}Ni_{0.6}Mn_{0.2}Co_{0.2}O_2$ with $0.01 \leq x \leq 0.10$, preferably $0.01 \leq x \leq 0.06$.

In one embodiment, Ni, Mn, and Co are partially replaced by Al (M'"=Al), such as in compound of formula $LiNi_{0,3}Mn_{0,5}Co_{0,15}Al_{0,05}O_2$.
A third preferred positive electrochemically active material is a compound iii) having the formula $Li_xMn_{2-y-z}M'_yM''_zO_4$ (LMO), where $1 \leq x \leq 1.4$ ; $0 \leq y \leq 0.6$ and $0 \leq z \leq 0.2$ and M' and M" are selected from the group consisting of B, Mg, Al, Si, Ca, Ti, V, Cr, Fe, Co, Ni, Cu, Zn, Y, Zr, Nb and Mo, M' being different from M".
A most preferred compound is one where x=1 ; $0 \leq y \leq 0.1$ ; z=0 and M' is Al, such as $LiMn_{1.92}Al_{0.08}O_4$.
The positive electrode consists of a conducting support being used as a current collector which is coated with a layer containing the positive electrochemically active material and further comprising a binder and a conductive material.
The current collector is preferably a two-dimensional conducting support such as a solid or perforated sheet, based on carbon or metal, for example in nickel, steel, stainless steel or aluminum, preferably aluminum.
The binder used in the positive electrode may be chosen from the binders disclosed in relation with the negative electrode.
The conductive material is selected from graphite, carbon black, acetylene black, soot or one of their mixtures.
Cells are produced in conventional manner. The positive electrode, a separator, and the negative electrode are superposed. The assembly is rolled up (respectively stacked) to form the electrochemical jelly roll (respectively the electrochemical stack). A connection part is bonded to the edge of the positive electrode and connected to the current output terminal. The negative electrode can be electrically connected to the can of the cell. Conversely, the positive electrode could be connected to the can and the negative electrode to an output terminal. After being inserted into the can, the electrochemical stack is impregnated in electrolyte. Thereafter the cell is closed in a leaktight manner. The can can also be provided in conventional manner with a safety valve causing the cell to open in the event of the internal gas pressure exceeding a predetermined value. The description given above is made in reference to a can having a cylindrical shape. However, the shape of the can is not limited, it can also be a prismatic shape in the case of plane electrodes.
The lithium salt can be selected from lithium perchlorate $LiClO_4$, lithium hexafluorophosphate $LiPF_6$, lithium tetrafluoroborate $LiBF_4$, lithium trifluoromethanesulfonate $LiCF_3SO_3$, lithium bis(fluorosulfonyl)imide $Li(FSO_2)_2N$ (LiFSI), lithium trifluoromethanesulfonimide $LiN(CF_3SO_2)_2$ (LiTFSI), lithium trifluoromethanesulfonemethide $LiC(CF_3SO_2)_3$ (LiT-

FSM), lithium bisperfluoroethylsulfonimide $LiN(C_2F_6SO_2)_2$ (LiBETI), lithium 4,5-dicyano-2-(trifluoromethyl) imidazolide (LiTDI), lithium bis(oxalatoborate) (LiBOB), lithium tris(pentafluoroethyl) trifluorophosphate $LiPF_3(CF_2CF_3)_3$ (LiFAP) and mixtures of the foregoing.

Preferably the solvent is one or a mixture of solvents selected from conventional organic solvents, in particular saturated cyclic carbonates, unsaturated cyclic carbonates and non-cyclic carbonates, alkyl esters, such as formates, acetates, propionates or butyrates, ethers, lactones such as gamma-butyrolactone, tetrahydrothiofene dioxide, nitrile solvents, and mixtures thereof. Of the saturated cyclic carbonates, mention may be made of, for example, ethylene carbonate (EC), fluoroethylene carbonate (FEC), propylene carbonate (PC), butylene carbonate (BC), and mixtures of the above. Among the unsaturated cyclic carbonates, mention may be made of, for example, vinylene carbonate (VC), vinyl ethylene carbonate (VEC) its derivatives and mixtures thereof. Among non-cyclic carbonates, mention may, for example, be made of dimethyl carbonate (DMC), diethyl carbonate (DEC), ethyl methyl carbonate (EMC), dipropyl carbonate (DPC) and mixtures thereof. Among the alkyl esters we can for example mention methyl acetate, ethyl acetate, methyl propionate, ethyl propionate, butyl propionate, methyl butyrate, butyrate ethyl, propyl butyrate and mixtures thereof. Among the ethers we can for example mention dimethyl (DME) or diethyl (DEE) ether, and mixtures thereof.

The electrolyte can be selected from a non-aqueous liquid electrolyte comprising a lithium salt dissolved in a solvent and a solid polymer ion conducting for lithium ions electrolyte, such as polyethylene oxide (PEO).

The separator may consist of a layer of polypropylene (PP), polyethylene (PE), polytetrafluoroethylene (PTFE), polyacrylonitrile (PAN), polyethylene terephthalate (PET), cellulose or of a mixture of layers of different natures. The cited polymers can be coated with a ceramic layer and/or with polyvinylidene difluoride (PVdF) or poly(vinylidene fluoride-hexafluoropropylene (PVdF-HFP) .

One advantage of the cell according to the invention is that it may be charged at high rates. Typical high charge rates range from 0.5C to 7C. The cell may be charged at a charge rate of at least C, at least 2C, at least 3C or at least 5C.

Further, the cell may be discharged at high rates but it still provides a high Ampere-hour capacity despite this high discharge rate. Typical high discharge rates range from 0.5C to 7C. The cell may be discharged at a discharge rate of at least C, at least 2C, at least 3C and at least 5C. The invention present another advantage than that of extending the lifetime of the cell or allowing to reach higher depths of discharge. By increasing the energy density of the cell, it is possible to lower the weight of the electrochemical cell and consequently, the weight of the satellite.

The cell according to the invention is used in a satellite operated in low earth orbit. The use of this cell avoids the development of heterogeneity of the lithium distribution at the negative electrode thanks to the presence of a lithiated titanate oxide (or a titanate oxide able to be lithiated). Indeed, in a conventional cell equipping a satellite placed in low earth orbit and which contains graphite as the negative electrochemically active material, one observes heterogeneity of the lithium distribution at the negative electrode when it is charged at a high current. In such a situation where there is no rest period between the charge and the discharge, homogenization of the lithium distribution cannot occur and the heterogeneity of the lithium distribution remains at the negative electrode. The cell according to the invention solves this problem through the use of a lithiated titanate oxide (or a titanate oxide able to be lithiated) in the negative electrode. The cell according to the invention can withstand a series of charges/discharges at a high current even in the absence of any rest period between charge and discharge.

The cell prepared according to the invention may be used in particular in a communication satellite or an Earth or space observation satellite.

The invention is of less interest when the cell is to be used in satellites placed in a geostationary orbit, that is, an orbit located at an altitude of 36,000 km above the Earth's equator. Indeed, a satellite placed in a geostationary orbit follows the direction of the earth's rotation. Its orbital period is thus equal to the Earth's rotational period (24 hours). Therefore, the cell it contains does not undergo about 15 charge/discharge cycles in a day. It can be charged at a lower current, in which case, the problem of the heterogeneity of lithium distribution does not occur.

EXAMPLES

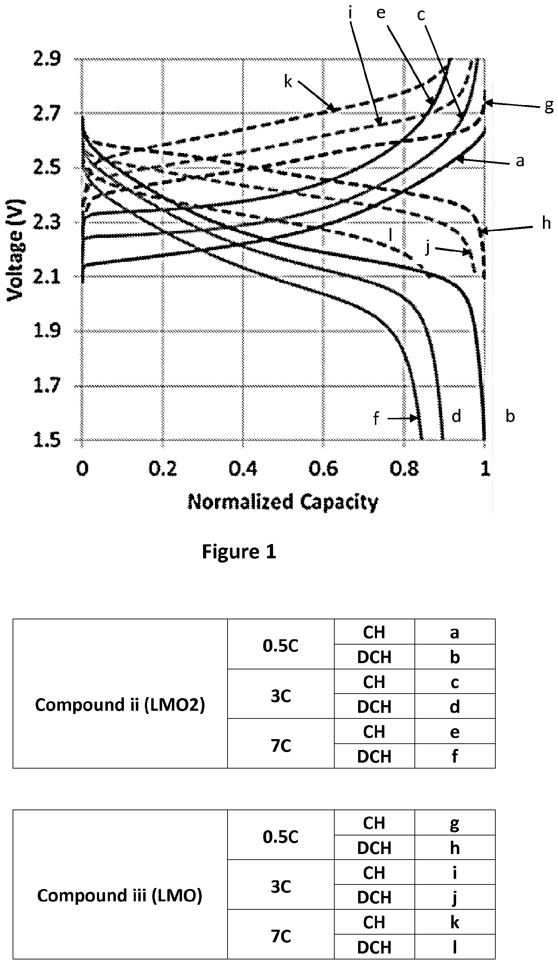

A) The following example illustrates the good charging capability and the good discharging capability of the cell according to the invention. Two cells were prepared. The positive electrochemically active material of the first cell is a type ii) compound (LMO2) comprising nickel, manganese and cobalt. The positive electrochemically active material of the second cell is a type iii) compound (LMO). The negative electrochemically active material in both cells is a lithiated titanate oxide (LTO). Each cell has undergone a charge followed by a discharge. Charge and discharge were performed at the three following rates: 0.5C, 3C and 7C. Figure 1 shows the charge and discharge curves at these various rates. As far as the charging ability is concerned, it is worth noting from Figure 1 that the cell according to the invention can be charged at a high charge rate. This is evidenced by the shape of the charge curves which show that the inclined plateaus extend up to about 90% of the cell nominal capacity. This indicates that the cell can be charged up to about 90% of its nominal capacity before the polarization phenomenon occurs. When the cell is charged beyond about 90% of its capacity, the polarization phenomenon occurs and the charge curves exhibit a steep upward slope.
The table below indicates the Ampere-hour capacity provided by the cell at various high discharge rates.

| Discharge rate | Discharge duration | Capacity supplied by the cell with respect to the nominal capacity C of the cell |
|---|---|---|
| 0.5C | 2 h | 97-100 % |
| 3C | 20 min | 90-97% |
| 7C | 8 min | 80-90% |

It is worth noting that even at the discharge rates 3C and 7C, the capacity supplied by the cell remains high, that is, at least 80%.

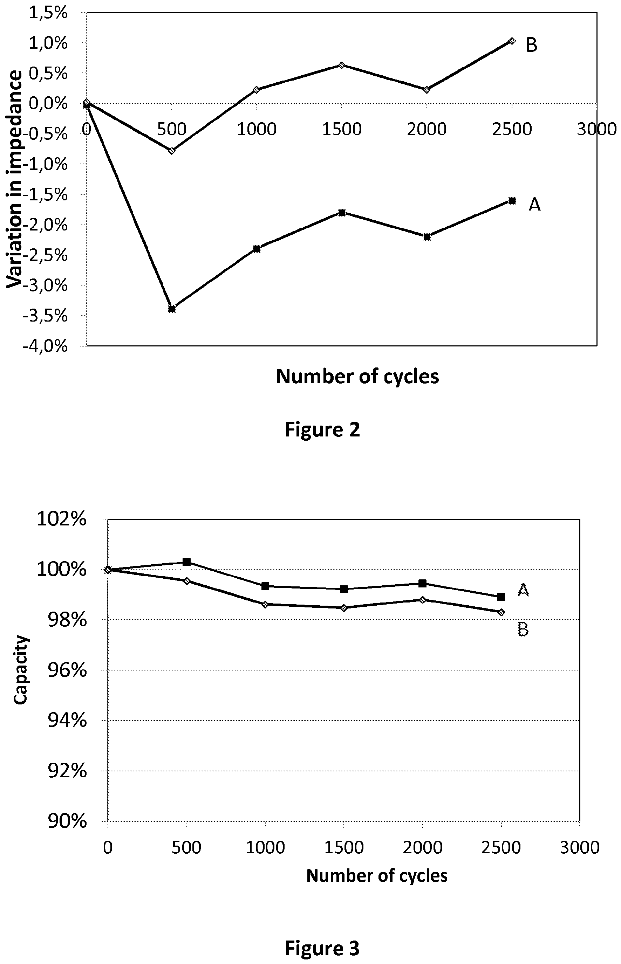

**B)** Two cells A-B according to the invention were prepared. In both cells, the positive electrochemically active material is a lithiated oxide of nickel, cobalt and aluminum (NCA). The negative electrochemically active material is a lithiated titanate oxide (LTO). The operating of the cell in a low earth orbit application was simulated by subjecting the cell to cycles of charge/discharge. The charge was performed at a C rate. The discharge was performed at a 2C rate and down to a depth of discharge of 80%. The impedance of cells A and B was measured at every 500 cycles by subjecting the cell to a C/2 discharge rate. The variation of impedance as a function of the number of cycles is shown on Fig.2. Figure 2 shows that the variation in impedance remains limited during the first 2,500 cycles. Indeed, it is 5% or less for both cells. The capacity of cells A and B was measured at every 500 cycles by subjecting the cell to a C/2 discharge rate. The variation of capacity as a function of the number of cycles is shown on Figure 3. Figure 3 shows that capacity loss remains very limited during the first 2,500 cycles, since it is 2% or less.

**C)** Two groups of cells were prepared. The first group comprises one cell, cell C, which is a reference cell. Its negative electrode contains graphite as an electrochemically active material. The second group comprises eight cells, namely cells D-K, the negative electrode of which contains a lithiated titanate oxide as electrochemically active material: Cells D-K are according to the invention.

Cells C-K were tested under conditions which simulate the operating of a cell placed in low Earth orbit. The following charge/discharge rates were applied:

- a charge current of C/6 when the depth of discharge is 15% ;
- a charge current of C/5 when the depth of discharge is 20% ;
- a charge current of C/3 when the depth of discharge is 30%.

The discharge current was:

- C/4 when the depth of discharge is 15%;
- C/3 when the depth of discharge is 20%;
- C/2 when the depth of discharge is 30%.

The table below shows for each cell, the depth of discharge down to which it is discharged, the temperature at which the cell operates and the charging cut-off voltage.

| Cell | Depth of discharge (%) | Temperature (°C) | Charging cut-off voltage (V) |
|---|---|---|---|
| C | 15 | 20 | 4.10 |
| D | 30 | 20 | 4.05 |
| E | 20 | 30 | 4.05 |
| F | 20 | 20 | 4.05 |
| G | 20 | 20 | 4.00 |
| H | 15 | 20 | 3.85 |
| I | 15 | 20 | 3.95 |
| J | 20 | 20 | 3.90 |
| K | 15 | 20 | 4.05 |

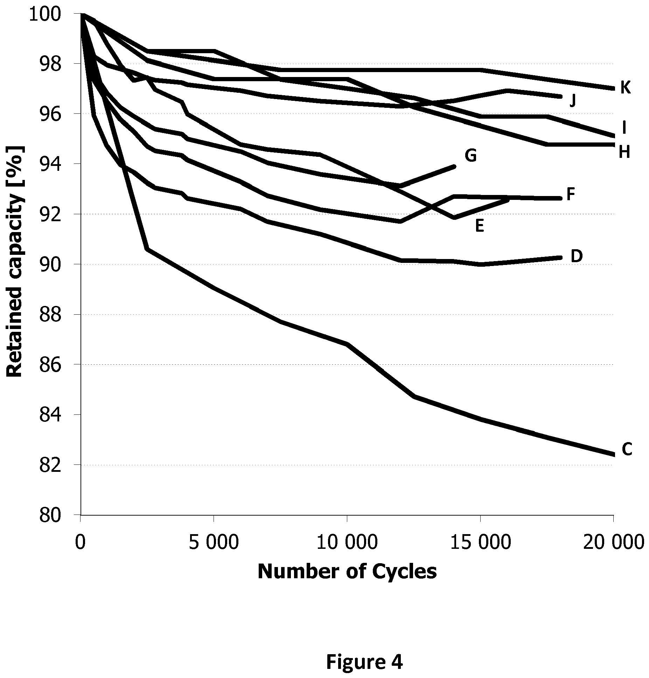

Figure 4 shows the percentage of retained capacity as a function of the number of cycles for a reference cell (C) and for cells according to the invention (D-K). It shows that cell C, which serves as a reference, exhibits a capacity loss of 18% after 20,000 cycles. In comparison, cells H, I and K, which were cycled under the same conditions exhibit a capacity loss of less than 6%.

Additionally, Figure 4 shows with cells D, E, F, G and J, that these cells may be cycled at a higher depth of discharge than cell C but still exhibit a lower capacity loss. Indeed, cells D, E, F, G and J were cycled at a depth of discharge of 20 or 30%, thus higher than 15%, but they still exhibit a capacity loss of 10% or less after 15,000 cycles, which is lower than the capacity loss of 16% after 15,000 cycles obtained with cell C.

These results thus show that a cell having a negative electrode comprising a lithiated titanate oxide is less subject to capacity loss than a cell containing graphite having a negative electrode comprising graphite. It is to be noted that the charge-cut off voltage has little influence on the cell cycling ability. Although, the cut-off voltage is varied in the examples, it is not responsible for the significant increase of the life cycle in the cells according to the invention.

**Claims**

1. Use of an electrochemical cell in a low earth orbit spacecraft, said electrochemical cell comprising a positive electrode and a negative electrode, said negative electrode comprising as an electrochemically active material a lithiated titanate oxide or a titanate oxide able to be lithiated.

2. Use according to claim 1, wherein the electrochemical cell is discharged at a depth of discharge of at least 50%, preferably at least 70%, most preferably 80%.

3. Use according to any of the preceding claims, wherein the electrochemical cell is charged at a current of at least C/2, preferably at least C, wherein C is the nominal capacity of the electrochemical cell.

4. Use according to any of the preceding claims, wherein the electrochemical cell undergoes at least 15 cycles of charge/discharge per day.

5. Use according to any of the preceding claims, wherein the lifetime of the electrochemical cell is up to 12 years.

6. Use according to claims 4 and 5, wherein the electrochemical cell is capable of undergoing at least about 65,000 cycles during its lifetime, preferably at least 70,000 cycles.

7. Use according to any of the preceding claims, wherein the lithiated titanate oxide or the titanate oxide able to be lithiated is selected from the group consisting of:

   a) $Li_aTi_bO_4$ wherein $0.5 \leq a \leq 3$ and $1 \leq b \leq 2.5$
   b) $Li_xMg_yTi_zO_4$ wherein $x>0$ ; $z>0$ ; $0.01 \leq y \leq 0.20$ ; $0.01 \leq y/z \leq 0.10$ and $0.5 \leq (x+y)/z \leq 1.0$
   c) $Li_{4+y}Ti_{5-d}M^2_dO_{12}$ wherein $M^2$ is at least one metal selected from the group consisting of Mg, Al, Si, Ti, Zn, Zr, Ca, W, Nb, and Sn, $-1 \leq y \leq 3.5$ and $0 \leq d \leq 0.1$
   d) $H_2Ti_6O_{13}$
   e) $H_2Ti_{12}O_{25}$
   f) $TiO_2$
   g) $Li_xTiNb_yO_z$ wherein $0 \leq x \leq 5$ ; $1 \leq y \leq 24$ ; $7 \leq z \leq 62$
   h) $Li_aTiM_bNb_cO_{7+\sigma}$ wherein $0 \leq a \leq 5$ ; $0 \leq b \leq 0.3$ ; $0 \leq c \leq 10$ ; $-0.3 \leq \sigma \leq 0.3$ and M is at least one element selected from Fe, V, Mo and Ta
   i) $Nb_\alpha Ti_\beta O_{7+\gamma}$ wherein $0 \leq \alpha \leq 24$ ; $0 \leq \beta \leq 1$ ; $-0.3 \leq \gamma \leq 0.3$

and mixtures thereof.

8. Use according to any of the preceding claims, wherein the positive electrode comprises an electrochemically active material selected from the group consisting of:

   - compound i) having the formula $Li_xMn_{1-y-z}M'_yM''_zPO_4$ (LMP), where M' and M" are different from one another and are selected from the group consisting of B, Mg, Al, Si, Ca, Ti, V, Cr, Fe, Co, Ni, Cu, Zn, Y, Zr, Nb and Mo, with $0.8 \leq x \leq 1.2$ ; $0 \leq y \leq 0.6$ ; $0 \leq z \leq 0.2$;
   - compound ii) having the formula $Li_xM_{2-x-y-z-w}M'_yM''_zM'''_wO_2$ (LMO2), where M, M', M" and M''' are selected from the group consisting of B, Mg, Al, Si, Ca, Ti, V, Cr, Mn, Fe, Co, Ni, Cu, Zn, Y, Zr, Nb and Mo, provided that M or M' or M" or M''' is selected from Mn, Co, Ni, or Fe ;

M, M', M" and M''' being different from each other; with $0.8 \leq x \leq 1.4$ ; $0 \leq y \leq 0.5$ ; $0 \leq z \leq 0.5$; $0 \leq w \leq 0.2$ and $x+y+z+w<2$ ;

- compound iii) having the formula $Li_xMn_{2-y-z}M'_yM''_zO_4$ (LMO), where M' and M" are selected from the group consisting of B, Mg, Al, Si, Ca, Ti, V, Cr, Fe, Co, Ni, Cu, Zn, Y, Zr, Nb and Mo; M' and M" are different from each other, and $1 \leq x \leq 1.4$ ; $0 \leq y \leq 0.6$ ; $0 \leq z \leq 0.2$ ;

- compound iv) of formula $Li_xFe_{1-y}M_yPO_4$ (LFMP), where M is selected from the group consisting of B, Mg, Al, Si, Ca, Ti, V, Cr, Mn, Co, Ni, Cu, Zn, Y, Zr, Nb and Mo; and $0.8 \leq x \leq 1.2$ ; $0 \leq y \leq 0.6$;

- compound v) of formula $xLi_2MnO_3$; $(1-x)LiMO_2$ where M is selected from Ni, Co and Mn and $x \leq 1$ ;

- compound vi) of formula $Li_{a+y}(M^1_{(1-t)}Mo_t)_2M^2_b(O_{1-x}F_{2x})_c$ wherein $M^1$ is selected from the group consisting of Ni, Mn, Co, Fe, V or a mixture thereof; $M^2$ is selected from the group consisting of B, Al, Si, P, Ti and Mo ; with $4 \leq a \leq 6$ ; $0 < b \leq 1.8$ ; $3.8 \leq c \leq 14$ ; $0 \leq x \leq 1$ ; $-0.5 \leq y \leq 0.5$ ; $0 \leq t \leq 0.9$ ; $b/a<0.45$ ;

the coefficient c satisfying one of the following relationships:

$$c= 4 + y/2 + z + 2t + 1.5b \text{ if } M^2 \text{ is selected from B and Al;}$$

$$c= 4 + y/2 + z + 2t + 2b \text{ if } M^2 \text{ is selected from Si, Ti and Mo;}$$

$$c= 4 + y/2 + z + 2t + 2.5b \text{ if } M^2 \text{ is P;}$$

with $z=0$ if $M^1$ is selected from Ni, Mn, Co and Fe; and $z=1$ if $M^1$ is V.

- compound vii) of formula $Li_{4+x}MnM^1_aM^2_bO_c$ wherein:

$M^1$ is selected from the group consisting in Ni, Mn, Co, Fe and a mixture thereof;
$M^2$ is selected from the group consisting in Si, Ti, Mo, B, Al and a mixture thereof; with:

$$-1.2 \leq x \leq 3 \text{ ; } 0<a \leq 2.5 \text{ ; } 0 \leq b \leq 1.5 \text{ ; } 4.3 \leq c \leq 10;$$

and

$$c=4+a+n.b+x/2$$

wherein:

n= 2 when $M^2$ is selected from the group consisting in Si, Ti, Mo or a mixture thereof; and
n=1.5 when $M^2$ is selected from the group consisting in B, Al or a mixture thereof,

- and a mixture of one or more of compounds i) to vii).

9. Use according to claim 8, wherein in compound ii);

$$1 \leq x \leq 1.15;$$

M is Ni;
M' is Co;
M" is Al
$y>0$;
$z>0$;
$w=0$.

10. Use according to claim 9, wherein $x=1$ ; $0.6 \leq 2-x-y-z \leq 0.85$ ; $0.10 \leq y \leq 0.25$ ; $0.05 \leq z \leq 0.15$.

**11.** Use according to claim 10, wherein compound ii) is $LiNi_{0,8}Co_{0,15}Al_{0,05}O_2$.

**12.** Use according to any of the preceding claims, wherein the spacecraft is a satellite, in particular a communication and Earth or space observation satellite.

## Patentansprüche

**1.** Benutzung einer elektrochemischen Zelle in einem Raumflugkörper in einer niedrigen Erdumlaufbahn, wobei die elektrochemische Zelle eine positive Elektrode und eine negative Elektrode umfasst, wobei die negative Elektrode ein lithiiertes Titanatoxid oder ein Titanatoxid, das fähig ist, lithiiert zu werden, als ein elektrochemisch aktives Material umfasst.

**2.** Benutzung nach Anspruch 1, wobei die elektrochemische Zelle mit einer Entladungstiefe von mindestens 50 %, bevorzugt mindestens 70 %, am bevorzugtesten 80 %, entladen wird.

**3.** Benutzung nach einem der vorhergehenden Ansprüche, wobei die elektrochemische Zelle mit einem Strom von mindestens C/2, bevorzugt mindestens C, geladen wird, wobei C die Nennkapazität der elektrochemischen Zelle ist.

**4.** Benutzung nach einem der vorhergehenden Ansprüche, wobei die elektrochemische Zelle mindestens 15 Lade-/Entlade-Zyklen pro Tag durchläuft.

**5.** Benutzung nach einem der vorhergehenden Ansprüche, wobei die Lebensdauer der elektrochemischen Zelle bis zu 12 Jahren beträgt.

**6.** Benutzung nach Anspruch 4 und 5, wobei die elektrochemische Zelle fähig ist, während ihrer Lebensdauer mindestens etwa 65.000 Zyklen, bevorzugt mindestens 70.000 Zyklen, zu durchlaufen.

**7.** Benutzung nach einem der vorhergehenden Ansprüche, wobei das lithiierte Titanatoxid oder das Titanatoxid, das fähig ist, lithiiert zu werden, aus der Gruppe ausgewählt ist, die besteht aus:

a) $Li_aTi_bO_4$, wobei $0,5 \leq a \leq 3$ und $1 \leq b \leq 2,5$
b) $Li_xMg_yTi_zO_4$, wobei $x > 0$; $z > 0$; $0,01 \leq y \leq 0,20$; $0,01 \leq y/z \leq 0,10$ und $0,5 \leq (x + y)/z \leq 1,0$
c) $Li_{4+y}Ti_{5-d}M^2{}_dO_{12}$, wobei $M^2$ mindestens ein Metall, ausgewählt aus der Gruppe, bestehend aus Mg, Al, Si, Ti, Zn, Zr, Ca, W, Nb, und Sn, $-1 \leq y \leq 3,5$ und $0 \leq d \leq 0,1$, ist
d) $H_2Ti_6O_{13}$
e) $H_2Ti_{12}O_{25}$
f) $TiO_2$
g) $Li_xTiNb_yO_z$, wobei $0 \leq x \leq 5$; $1 \leq y \leq 24$; $7 \leq z \leq 62$
h) $Li_aTiM_bNb_cO_{7+\sigma}$, wobei $0 \leq a \leq 5$; $0 \leq b \leq 0,3$; $0 \leq c \leq 10$; $-0,3 \leq \sigma \leq 0,3$ und M mindestens ein Element, ausgewählt aus Fe, V, Mo und Ta, ist
i) $Nb_\alpha Ti_\beta O_{7+\gamma}$, wobei $0 \leq \alpha \leq 24$; $0 \leq \beta \leq 1$; $-0,3 \leq \gamma \leq 0,3$

und Gemischen davon.

**8.** Benutzung nach einem der vorhergehenden Ansprüche, wobei die positive Elektrode ein elektrochemisch aktives Material umfasst, das aus der Gruppe ausgewählt ist, die besteht aus:

- Verbindung i) mit der Formel $Li_xMn_{i-y-z}M'_yM''_zPO_4$ (LMP), wo M' und M'' voneinander verschieden sind und aus der Gruppe, bestehend aus B, Mg, Al, Si, Ca, Ti, V, Cr, Fe, Co, Ni, Cu, Zn, Y, Zr, Nb und Mo, ausgewählt sind, mit $0,8 \leq x \leq 1,2$; $0 \leq y \leq 0,6$; $0 \leq z \leq 0,2$;
- Verbindung ii) mit der Formel $Li_xM_{2-x-y-z-w}M'_yM''_zM'_wO_2$ (LM02), wo M, M', M'' und M''' aus der Gruppe, bestehend aus B, Mg, Al, Si, Ca, Ti, V, Cr, Mn, Fe, Co, Ni, Cu, Zn, Y, Zr, Nb und Mo, ausgewählt sind, mit der Maßgabe, dass M oder M' oder M'' oder M''' aus Mn, Co, Ni oder Fe ausgewählt ist; M, M', M'' und M''' voneinander verschieden sind; mit $0,8 \leq x \leq 1,4$; $0 \leq y \leq 0,5$; $0 \leq z \leq 0,5$; $0 \leq w \leq 0,2$ und $x + y + z + w < 2$;
- Verbindung iii) mit der Formel $Li_xMn_{2-y-z}M'_yM''_zO_4$ (LMO), wo M' und M'' aus der Gruppe, bestehend aus B, Mg, Al, Si, Ca, Ti, V, Cr, Fe, Co, Ni, Cu, Zn, Y, Zr, Nb und Mo, ausgewählt sind; M' und M'' voneinander verschieden sind und $1 \leq x \leq 1,4$; $0 \leq y \leq 0,6$; $0 \leq z \leq 0,2$;

- Verbindung iv) mit der Formel $Li_xFe_{1-y}M_yPO_4$ (LFMP), wo M aus der Gruppe, bestehend aus B, Mg, Al, Si, Ca, Ti, V, Cr, Mn, Co, Ni, Cu, Zn, Y, Zr, Nb und Mo, ausgewählt ist; und $0,8 \leq x \leq 1,2$; $0 \leq y \leq 0,6$;
- Verbindung v) mit der Formeln $xLi_2MnO_3$; $(1-x)LiMO_2$, wo M aus Ni, Co und Mn ausgewählt ist und $x \leq 1$;
- Verbindung vi) mit der Formel $Li_{a+y}(M^1_{(1-t)}Mo_t)_2M^2_b(O_{1-x}F_{2x})_c$, wobei $M^1$ aus der Gruppe, bestehend aus Ni, Mn, Co, Fe, V, oder einem Gemisch davon ausgewählt ist; $M^2$ aus der Gruppe, bestehend aus B, Al, Si, P, Ti und Mo, ausgewählt ist; mit $4 \leq a \leq 6$; $0 < b \leq 1,8$; $3,8 \leq c \leq 14$; $0 \leq x < 1$; $-0,5 \leq y \leq 0,5$; $0 \leq t \leq 0,9$; $b/a < 0,45$; der Koeffizient c eines der folgenden Verhältnisse erfüllt:

$$c = 4 + y/2 + z + 2t + 1,5b,$$

wenn $M^2$ aus B und Al ausgewählt ist;

$$c = 4 + y/2 + z + 2t + 2b,$$

wenn $M^2$ aus Si, Ti und Mo ausgewählt ist;

$$c = 4 + y/2 + z + 2t + 2,5b,$$

wenn $M^2$ ist P;
mit z=0, wenn $M^1$ aus Ni, Mn, Co und Fe ausgewählt ist; und z = 1, wenn $M^1$ ist V;
- Verbindung vii) mit der Formel $Li_{4+x}MnM^1_aM^2_bO_c$, wobei:

$M^1$ aus der Gruppe, bestehend aus Ni, Mn, Co, Fe und einem Gemisch davon, ausgewählt ist;
$M^2$ aus der Gruppe, bestehend aus Si, Ti, Mo, B, Al und einem Gemisch davon, ausgewählt ist; mit:

$$-1,2 \leq x \leq 3; \ 0 < a \leq 2,5; \ 0 \leq b \leq 1,5; \ 4,3 \leq c \leq 10;$$

und

$$c = 4 + a + n.b + x/2$$

wobei:

n = 2, wenn $M^2$ aus der Gruppe, bestehend aus Si, Ti, Mo oder einem Gemisch davon, ausgewählt ist; und
n= 1,5, wenn $M^2$ aus der Gruppe, bestehend aus B, Al oder einem Gemisch davon, ausgewählt ist

- und einem Gemisch von einer oder mehreren von Verbindung i) bis vii).

**9.** Benutzung nach Anspruch 8, wobei in Verbindung ii):

$$1 \leq x \leq 1,15;$$

M ist Ni;
M' ist Co;
M" ist Al;
y>0;
z > 0;
w = 0.

**10.** Benutzung nach Anspruch 9, wobei x = 1; $0,6 \leq 2 - x - y - z \leq 0,85$; $0,10 \leq y \leq 0,25$; $0,05 \leq z \leq 0,15$.

**11.** Benutzung nach Anspruch 10, wobei Verbindung ii) LiNi$_{0,8}$Co$_{0,15}$Al$_{0,05}$O$_2$ ist.

**12.** Benutzung nach einem der vorhergehenden Ansprüche, wobei der Raumflugkörper ein Satellit, insbesondere ein Kommunikations- und Erd- oder Raumbeobachtungssatellit ist.

**Revendications**

**1.** Utilisation d'un élément électrochimique dans un astronef en orbite terrestre basse, ledit élément électrochimique comprenant une électrode positive et une électrode négative, ladite électrode négative comprenant, en tant que matériau électrochimiquement actif, un oxyde de titanate lithié ou un oxyde de titanate susceptible d'être lithié.

**2.** Utilisation selon la revendication 1, dans laquelle l'élément électrochimique est déchargé à une profondeur de décharge d'au moins 50 %, de préférence d'au moins 70 %, tout spécialement de 80 %.

**3.** Utilisation selon l'une quelconque des revendications précédentes, dans laquelle l'élément électrochimique est chargé à un courant d'au moins C/2, de préférence d'au moins C, où C est la capacité nominale de l'élément électrochimique.

**4.** Utilisation selon l'une quelconque des revendications précédentes, dans laquelle l'élément électrochimique subit au moins 15 cycles de charge/décharge par jour.

**5.** Utilisation selon l'une quelconque des revendications précédentes, dans laquelle la durée de vie de l'élément électrochimique va jusqu'à 12 ans.

**6.** Utilisation selon les revendications 4 et 5, dans laquelle l'élément électrochimique est capable de subir au moins environ 65 000 cycles durant sa durée de vie, de préférence au moins 70 000 cycles.

**7.** Utilisation selon l'une quelconque des revendications précédentes, dans laquelle l'oxyde de titanate lithié ou l'oxyde de titanate susceptible d'être lithié est choisi dans le groupe constitué par :

a) Li$_a$Ti$_b$O$_4$ où $0,5 \leq a \leq 3$ et $1 \leq b \leq 2,5$
b) Li$_x$Mg$_y$Ti$_z$O$_4$ où $x > 0$ ; $z > 0$ ; $0,01 \leq y \leq 0,20$ ; $0,01 \leq y/z \leq 0,10$ et $0,5 \leq (x+y)/z \leq 1,0$
c) Li$_{4+y}$Ti$_{5-d}$M$^2_d$O$_{12}$ où M$^2$ est au moins un métal choisi dans le groupe constitué par Mg, Al, Si, Ti, Zn, Zr, Ca, W, Nb et Sn, $-1 \leq y \leq 3,5$ et $0 \leq d \leq 0,1$
d) H$_2$Ti$_6$O$_{13}$
e) H$_2$Ti$_{12}$O$_{25}$
f) TiO$_2$
g) Li$_x$TiNb$_y$O$_z$ où $0 \leq x \leq 5$ ; $1 \leq y \leq 24$; $7 \leq z \leq 62$
h) Li$_a$TiM$_b$Nb$_c$O$_{7+\sigma}$ où $0 \leq a \leq 5$ ; $0 \leq b \leq 0,3$ ; $0 \leq c \leq 10$; $-0,3 \leq \sigma \leq 0,3$ et M est au moins un élément choisi parmi Fe, V, Mo et Ta
i) Nb$_\alpha$Ti$_\beta$O$_{7+\gamma}$ où $0 \leq \alpha \leq 24$ ; $0 \leq \beta \leq 1$ ; $-0,3 \leq \gamma \leq 0,3$

et leurs mélanges.

**8.** Utilisation selon l'une quelconque des revendications précédentes, dans laquelle l'électrode positive comprend un matériau électrochimiquement actif choisi dans le groupe constitué par :

- le composé i) de formule Li$_x$Mn$_{1-y-z}$M'$_y$M"$_z$PO$_4$ (LMP) où M' et M" sont différents et sont choisis dans le groupe constitué par B, Mg, Al, Si, Ca, Ti, V, Cr, Fe, Co, Ni, Cu, Zn, Y, Zr, Nb et Mo, avec $0,8 \leq x \leq 1,2$ ; $0 \leq y \leq 0,6$ ; $0 \leq z \leq 0,2$ ;
- le composé ii) de formule Li$_x$M$_{2-x-y-z-w}$M'$_y$M"$_z$M'''$_w$O$_2$ (LM02) où M, M', M" et M''' sont choisis dans le groupe constitué par B, Mg, Al, Si, Ca, Ti, V, Cr, Mn, Fe, Co, Ni, Cu, Zn, Y, Zr, Nb et Mo, sous réserve que M ou M' ou M" ou M''' sont choisis parmi Mn, Co, Ni ou Fe ; M, M', M" et M''' étant différents ; avec $0,8 \leq x \leq 1,4$ ; $0 \leq y \leq 0,5$ ; $0 \leq z \leq 0,5$ ; $0 \leq w \leq 0,2$ et $x+y+z+w < 2$ ;
- le composé iii) de formule Li$_x$Mn$_{2-y-z}$M'$_y$M"$_z$O$_4$ (LMO) où M' et M" sont choisis dans le groupe constitué par B, Mg, Al, Si, Ca, Ti, V, Cr, Fe, Co, Ni, Cu, Zn, Y, Zr, Nb et Mo ; M' et M" étant différents ; et $1 \leq x \leq 1,4$ ; $0 \leq y \leq 0,6$ ; $0 \leq z \leq 0,2$ ;

- le composé iv) de formule $Li_xFe_{1-y}M_yPO_4$ (LFMP) où M est choisi dans le groupe constitué par B, Mg, Al, Si, Ca, Ti, V, Cr, Mn, Co, Ni, Cu, Zn, Y, Zr, Nb et Mo ; et $0,8 \leq x \leq 1,2$ ; $0 \leq y \leq 0,6$ ;

- le composé v) de formule $xLi_2MnO_3$ ; $(1-x)LiMO_2$ où M est choisi parmi Ni, Co et Mn et $x \leq 1$ ;

- le composé vi) de formule $Li_{a+y}(M^1_{(1-t)}Mo_t)_2M^2_b(O_{1-x}F_{2x})_c$ où $M^1$ est choisi dans le groupe constitué par Ni, Mn, Co, Fe, V et leurs mélanges ; $M^2$ est choisi dans le groupe constitué par B, Al, Si, P, Ti et Mo ; avec $4 \leq a \leq 6$ ; $0 < b \leq 1,8$ ; $3,8 \leq c \leq 14$ ; $0 \leq x < 1$ ; $-0,5 \leq y \leq 0,5$ ; $0 \leq t \leq 0,9$ ; $b/a < 0,45$ ; le coefficient c satisfaisant à l'une des relations suivantes :

$$c = 4 + y/2 + z + 2t + 1,5b$$

si $M^2$ est choisi parmi B et Al ;

$$c = 4 + y/2 + z + 2t + 2b$$

si $M^2$ est choisi parmi Si, Ti et Mo ;

$$c = 4 + y/2 + z + 2t + 2,5b$$

si $M^2$ est P ;

avec $z = 0$ si $M^1$ est choisi parmi Ni, Mn, Co et Fe ; et $z = 1$ si $M^1$ est V ;

- le composé vii) de formule $Li_{4+x}MnM^1_aM^2_bO_c$ dans laquelle :

$M^1$ est choisi dans le groupe constitué par Ni, Mn, Co, Fe et leurs mélanges ;
$M^2$ est choisi dans le groupe constitué par Si, Ti, Mo, B, Al et leurs mélanges ; avec :

$$-1,2 \leq x \leq 3 ; 0 < a \leq 2,5 ; 0 \leq b \leq 1,5 ; 4,3 \leq c \leq 10 ;$$

et

$$c = 4+a+n.b+x/2$$

où :

$n = 2$ quand $M^2$ est choisi dans le groupe constitué par Si, Ti, Mo et leurs mélanges ; et
$n = 1,5$ quand $M^2$ est choisi dans le groupe constitué par B, Al et leurs mélanges,

- et un mélange d'un ou plusieurs des composés i) à vii).

9. Utilisation selon la revendication 8, dans laquelle, dans le composé ii) :

$$1 \leq x \leq 1,15 ;$$

M est Ni ;
M' est Co ;
M" est Al;
$y>0$;
$z>0$;
$w = 0$.

10. Utilisation selon la revendication 9, dans laquelle $x = 1$ ; $0,6 \leq 2-x-y-z \leq 0,85$ ; $0,10 \leq y \leq 0,25$ ; $0,05 \leq z \leq 0,15$.

11. Utilisation selon la revendication 10, dans laquelle le composé ii) est $LiNi_{0,8}Co_{0,15}Al_{0,05}O_2$.

**12.** Utilisation selon l'une quelconque des revendications précédentes, dans laquelle l'astronef est un satellite, en particulier un satellite de communication et d'observation de la terre ou de l'espace.

**Figure 1**

| Compound ii (LMO2) | 0.5C | CH | a |
| --- | --- | --- | --- |
| | | DCH | b |
| | 3C | CH | c |
| | | DCH | d |
| | 7C | CH | e |
| | | DCH | f |

| Compound iii (LMO) | 0.5C | CH | g |
| --- | --- | --- | --- |
| | | DCH | h |
| | 3C | CH | i |
| | | DCH | j |
| | 7C | CH | k |
| | | DCH | l |

Figure 2

Figure 3

**Figure 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101800307 A
- CN 103107323 A
- EP 2945211 A2
- WO 2014142078 A1
- US 2010273055 A1